# EUROPEAN PATENT SPECIFICATION

(11) **EP 2 391 835 B1**
(45) Date of publication and mention of the grant of the patent: **05.06.2013**
(21) Application number: 10709065.6
(22) Date of filing: 28.01.2010
(51) Int. Cl.: F16D 65/12

(54) **BRAKE DISK AND ASSOCIATED METHOD OF PRODUCTION**
*
DISQUE DE FREIN ET PROCÉDÉ DE PRODUCTION ASSOCIÉ

(30) Priority: 28.01.2009 IT MI20090099
(43) Date of publication of application: 07.12.2011
(73) Proprietor: Greppi, Bruno, 23884 Castello Brianza (IT)
(72) Inventor: ENZLER, Mario, CH-6902 Paradiso (CH)
(74) Representative: Cinquantini, Bruno
(86) International application number: PCT/IB2010/050388
(87) International publication number: WO 2010/086816

(56) References cited:
- EP-A1- 1 207 001
- EP-A2- 0 318 687
- DE-U- 1 974 457
- DE-U1- 9 421 542
- JP-A- 59 062 738
- US-A- 4 742 948
- US-B2- 7 478 719

## Description

### Field of the invention

The present invention relates to a disk for disk braking systems, in particular for motorcycles.

### Prior art

In the field of disk braking systems, such as the braking systems for motorcycles, various solutions for dispersing the friction heat generated and for regenerating the brake pad surface have been studied. Perforated disks or disks with protrusions and recesses have been developed. These solutions, rather simple from the constructional point of view, are not completely satisfactory with regards to braking uniformity and friction force, particularly during the initial stage. Brake disks have thus been developed which are the object of Italian application MI2003A001814, having hollows on the faces, the hollows of one face being preferably offset with respect to those of the other, to ensure braking uniformity and disk strength. Being of various shape and inclination, the hollows may preferably concern at least the outer edge of the disk or extend from the inner edge to the outer edge. Machining these disks, which operation may comprise the creation of hollows by milling, is however much longer and more complex than the common perforated disks. Solutions have been suggested in which the disk consists of two half-disks linked to each other by means of rivets, but the solution was found to be difficult to be manufactured with unsatisfactory results in disk shape and inadequate behavior as a result of thermal expansion phenomena. Other examples of known solutions of disk braking systems are disclosed in EP 0318687, US 4742948, US 7478719, DE 9421542, EP 1207001 and JP 59062738.

A brake disk which is simple to be manufactured would be desirable to allow an adequate heat exchange and an adequate force, without negative repercussions on robustness, the weight and size being equal.

### Summary of the invention

The above-mentioned problems have now been solved by a brake disk according to claim 1.

According to preferred aspect, the weld material has a fusion temperature of at least 950 °C, preferably 1050 °C and more preferably 1100 °C. According to a preferred aspect, it is a Ni-Cu based compound, preferably a Fe-Ni based compound. Thereby, the weld material may withstand temperatures of at least 950°C or even higher, and in all cases higher than those which may be generated by using the brake.

The two half-disks have holes and/or recesses in the profile of the edges which are offset with respect to those of the other half-disk so as to form, with the other half-disk, closed or half-closed cavities in the brake disk on the disk surfaces exposed to the brake pads. According to another aspect of the invention, the two half-disks may consist of several portions; the portions of a half-disk are offset if compared to those of the other half-disk, so that once the brazing operation has been performed, a half-disk portion keeps together at least two portions of the other half-disk.

The invention further relates to a method for manufacturing a brake disk as shown above.

### Brief description of the drawings

The present invention will now be disclosed by means of the detailed description of preferred but not exclusive embodiments, provided by way of example only, with the aid of accompanying figures 1 and 2, which diagrammatically illustrate brake disks for motorcycles according to various aspects of the invention. Figures 3 and 4 show discs, however not in accordance with the claims, provided with hollows. Figure 5 shows a half-disk portion for manufacturing a disk according to a particular aspect of the invention.

### Detailed description of an embodiment

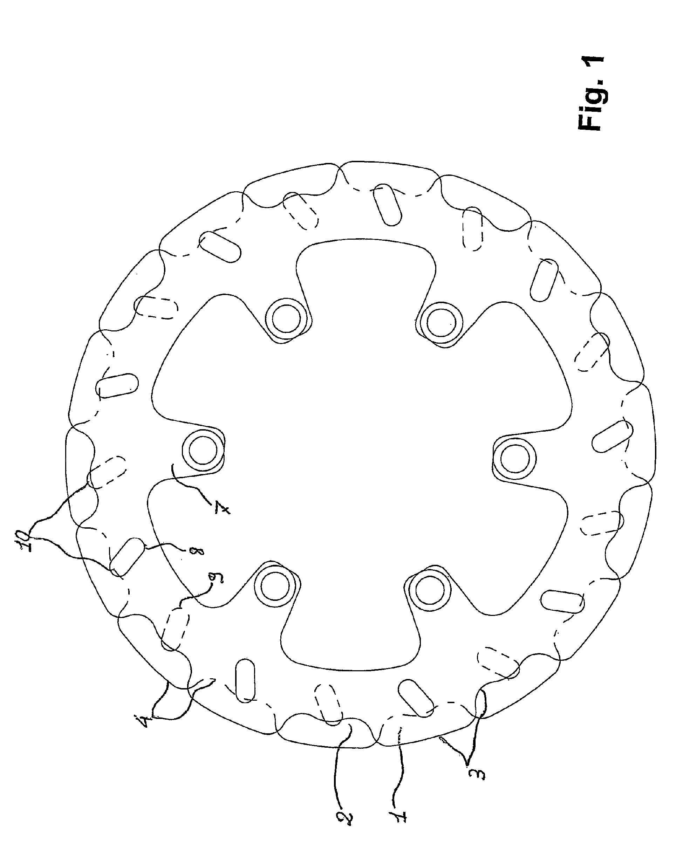

The figures 1,2 and 5 show brake disks according to the invention. The brake disk, in particular brake disks for motorcycles, may be made of any material suitable for the purpose, preferably steel which is commonly used. The disks according to the present invention have two overlapping half-disks 1 and 2 directly linked to each other by brazing. In the figures, the dashed line shows the hidden profile of the furthermost half-disk from the observer. Similar details are shown by the same reference number.

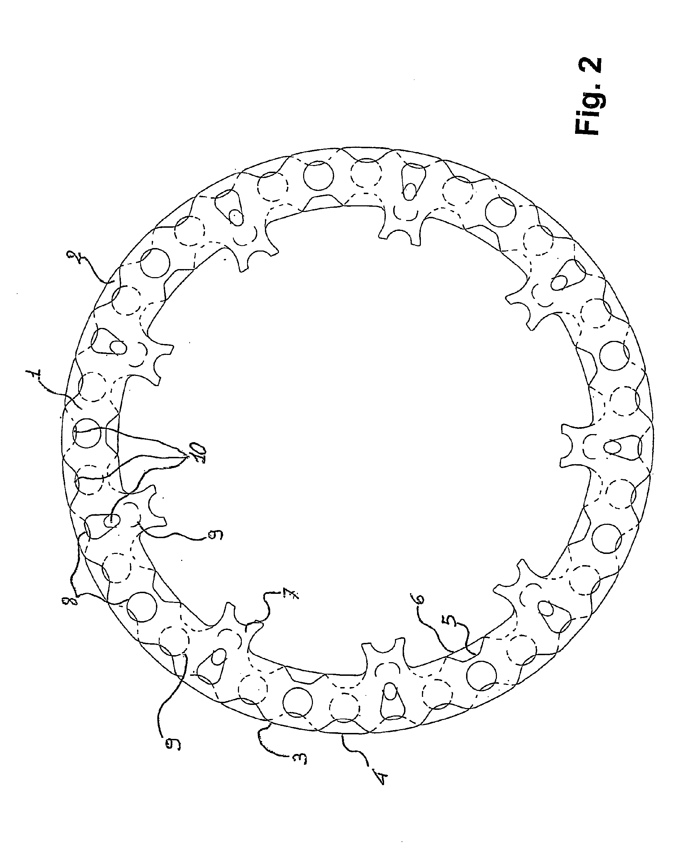

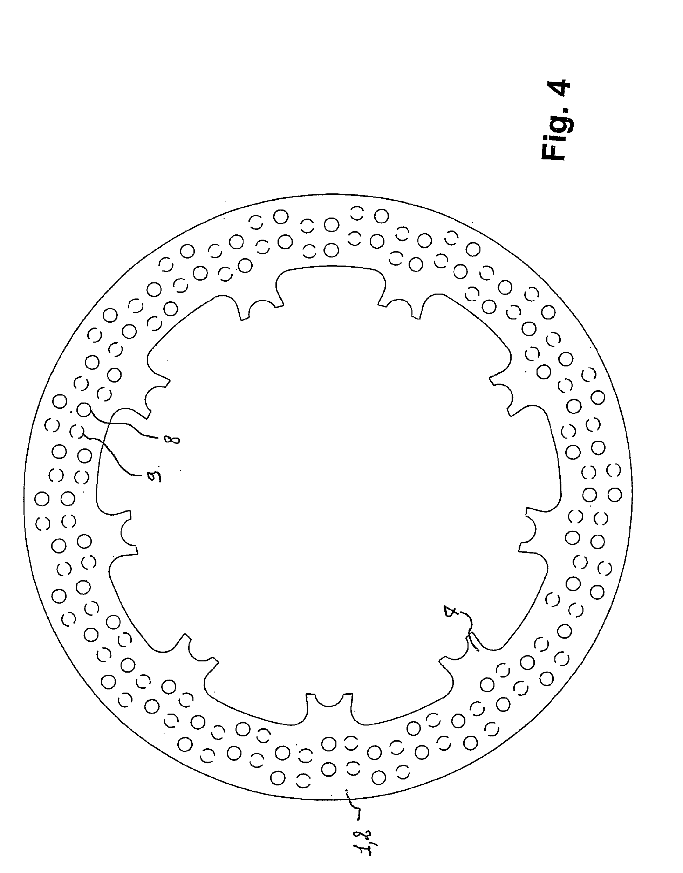

It is worth noting that, according to a particular aspect of the invention related to figures 1 and 2, the half-disks may have a pattern of the edges, in particular of the outer edges 3 and 4, but also according to a further aspect exemplified In figure 2, of the inner edges 5 and 6, which may be corrugated or ragged, different from a circular profile; the two half-disks may have a similar or different profile. If the profile is similar, according to an aspect of the invention, it is offset in joining the two disks, as shown in figures 1 and 2. The opportunity that the support connections 7 of the disk to the wheel hub, which may be of known type - e.g. of the so-called "fixed" (figure 1-3) or "floating" (figures 2 and 4) type - are provided on the two half-disks so as to mate despite the profile offsetting, is taken into account. Alternatively, the connections may also be provided on only one of the half-disks or distributed therebetween, in an alternating manner, for example.

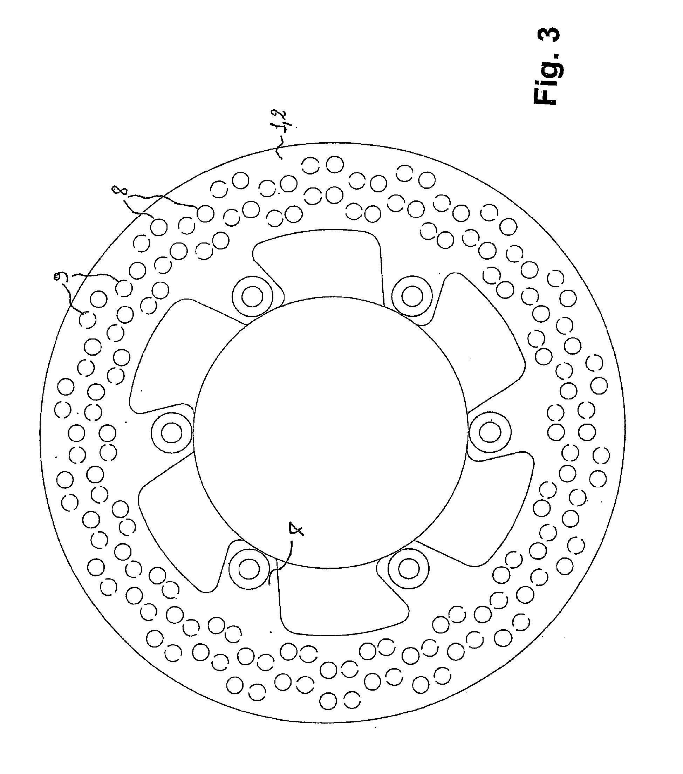

Each of the two half-disks may be provided with holes: the holes of the disk facing the observer indicated by numeral 8 and those of the disk underneath indicated by numeral 9. The holes are preferably offset. Thereby, closed hollows are created on the two disk faces. If deemed appropriate, part of the holes may be coinciding to create through holes in the disk. As exemplified in figures 3 and 4, the disk edges may also be circular and may coincide. In this case, the technique according to the present invention allows to create hollows by offsetting the holes, indicated again by reference numerals 8 and 9.

According to the invention, the holes of a half-disk partially overlap the holes or recesses of one edge of the other disk, so as to create through holes 10, as shown in figures 1 and 2, at hollows created as shown above in order to increase ventilation and heat dispersion.

According to a further aspect of the invention, the half-disks may in turn consist of several portions. These portions may be substantially shaped as a circular crown sector, may be three on each half-disk, for example, and may correspond to an arc of substantially equal width. They may have an interlocking conformation at the ends thereof, for facilitating their positioning thus creating a joint. By arranging the portions of a half-disk so that the joints between the various portions are offset between the two half-disks, brazing the two half-disks will allow to keep the various portions of a half-disk together. A portion of a half-disk will keep the two portions of the other half-disk together, thus making direct joining systems between the two portions unnecessary. An advantage related to this type of construction is related to that the steel brake disks are commonly obtained by shearing or cutting (e.g. laser cutting) metal sheets which may have a certain preferential orientation of the crystals in a direction due to machining. Such an orientation will be kept to a certain extent by the disk obtained, despite the usual tempering treatment. Such an orientation may lead to anisotropy in the mechanical behavior and thermal expansion, thus favoring deformation and strain. Therefore, the crystals in the finished disk could desirably be everywhere oriented in the same manner with respect to the radial direction, e.g. precisely in such a direction, which is obviously impossible with a disk cut in one piece from a metal sheet. By cutting several appropriately oriented portions from the metal sheet, and then assembling them, the orientation may be made more uniform with respect to the radial direction, the higher the number of portions. Disks consisting of several portions assembled by means of an interlocking system have already been suggested. However, the present invention provides a further advantage in that a complete disk, ready to be assembled without further complications, is provided.

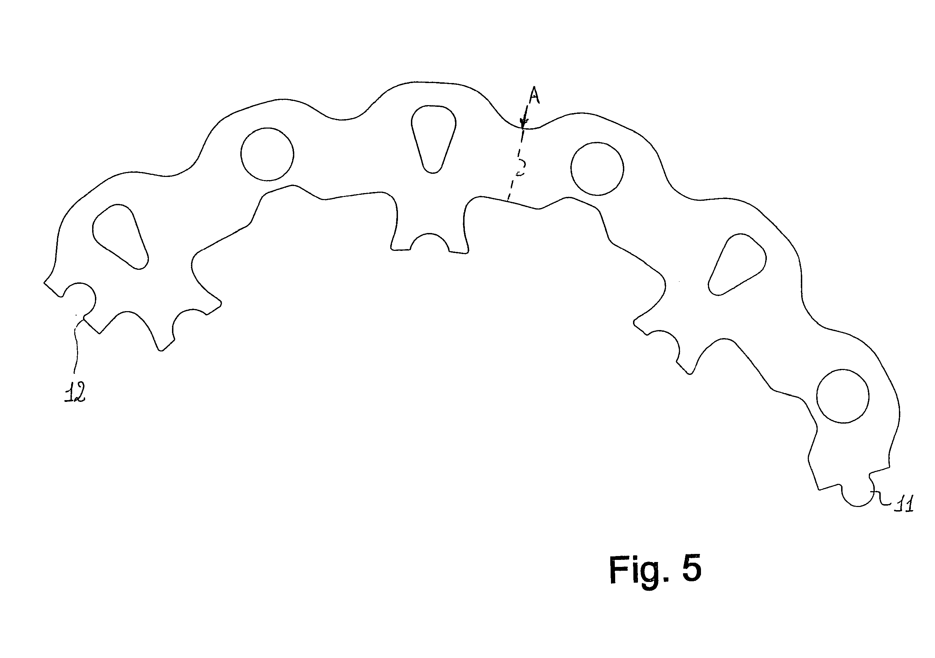

Figure 5 shows one of the half-disk portions from which a disk may be obtained as described above. If required, the complementary ends 11 and 12 may be shaped so as to couple with the corresponding ends of the adjacent portions, thus facilitating a correct positioning. In the illustrated case, three portions may form a half-disk. The second half-disk is similarly formed, by carefully placing the joints so as to be offset with respect to those of the first half-disk: a joint of the second half-disk may be where indicated by arrow A in figure 5, for example.

The invention refers to a method of production of brake disks, preferably made of steel, comprising: obtaining two half-disks preferably made of steel from a metal sheet by cutting or shearing, laying the weld material for brazing at a temperature of at least 950°C, preferably at least 1050°C, more preferably at least 1100°C, the relative positioning of the half-disks on a face of at least one of the half-disks, the heating at a temperature suitable to the brazing.

The obtained disk is cooled and the usually treatments, such as grinding, follow. It should be noted that the temperatures indicated above are such to allow steel tempering, if the disks are made of such a material. The brazing and subsequent cooling operations may thus be conducted, according to a possible aspect of the invention, so as to simultaneously allow such a phenomenon.

The half-disks may be obtained from the metal sheet with the desired profile and holes.

If the half-disks consist of several portions, the method may comprise the steps of assembling one of the half-disks, e.g. by simply arranging the portions side-by-side in an appropriate manner, laying the weld material on one of the faces of the half-disk, assembling the second half-disk on the face of the first disk which receives the weld material. The steps of brazing and the subsequent operations follow. If deemed appropriate, placing the weld material on the faces of the portions of one or both of the half-disks and then assembling the disk is further possible.

The weld material may be laid on the face of one of the half-disks in a know manner. Techniques such as deposition according to techniques similar to printing, e.g. by ink jet, may be used if the weld material is a compound which contains metal powder (e.g. Ni - Cu or Fe-Ni) and other appropriate components, such as binders. It has been found that a very advantageous technique because of its machining simplicity, laying uniformity and material dispensing is the screen printing process. The machines commonly used for screen printing and for printing images on objects have been found suitable for the purpose.

The half-disks or portions may be obtained from metal sheet by shearing or cutting, according to the same techniques used for common disks.

## Claims

1. Brake disk comprising two half-disks (1, 2), each having a friction surface able to interact with a brake pad and directly linked to each other by brazing on a face opposite to said friction surface **characterised in that** said two half-disks have holes (8,9) and/or recesses in the edge profile (3,4, 5, 6) which are offset if compared to the ones of the other half disk in order to form with the other half disk closed or half-closed cavities in the brake disk on the disk surfaces exposed to the brake pads, said holes and/or said edges of a half-disk partially overlapping the holes and/or the edges of the other half-disk in order to form through holes (10) in the disk.

2. Brake disk according to Claim 1, **characterized in that** the weld material used for the brazing has a fusion temperature of at least 950°C, preferably 1050°C and more preferably 1100°C.

3. Brake disk according to Claim 2, **characterized in that** the weld material is made of a Ni-Cu based compound or a Fe-Ni based compound.

4. Brake disk according to any one of the preceding Claims, **characterized in that** it is made of steel, preferably stainless steel.

5. Brake disk according to any one of the preceding Claims, **characterized in that** the two half-disks are formed by several portions substantially corresponding to a circular sector, the portions of half-disk being offset if compared to those of the other half-disk, so that after the brazing a portion of half-disk keeps together at least two portions of the other half-disk.

6. Brake disk according to Claim 5 , wherein said portions are three per half-disk.

7. Method of production of brake disks according to any of the claims 1-6, comprising the obtainment of two half-disks, the laying of weld material for a brazing at a temperature of at least 1000°C, preferably at least 1050°C, more preferably at least 1100°C, the relative positioning of the half-disks on a face of at least one of the half-disks, the heating at a temperature suitable to the brazing.

8. Method according to Claim 7, wherein each half-disk is obtained by assembling several portions corresponding to a portion of circular crown.

9. Method according to Claim 7 or 8, wherein the weld material is based on Ni-Cu or Fe-Ni.

10. Method according to any one of Claims 7-9, wherein the weld material is a compound and the laying occurs by means of a paint-screen process.

## Patentansprüche

1. Bremse mit zwei Halbscheiben (1, 2), die jeweils eine Reibfläche besitzen, die in der Lage ist, mit einem Bremsbelag wechselzuwirken, und die direkt miteinander durch Hartlöten an einer Seite gegenüberliegend der Reibfläche gekoppelt sind, **dadurch gekennzeichnet, dass**
die beiden Halbscheiben Löcher (8, 9) und/oder Ausnehmungen in dem Randprofil (3, 4, 5, 6) besitzen, die im Vergleich zu denen der anderen Halbscheibe versetzt sind, um mit der anderen Halbscheibe geschlossene oder halb geschlossene Hohlräume in der Bremsscheibe an den Scheibenflächen, die zu den Bremsbelägen freiliegen, zu bilden, wobei die Löcher und/oder die Ränder einer Halbscheibe die Löcher und/oder die Ränder der anderen Halbscheibe teilweise überlappen, um Durchgangslöcher (10) in der Scheibe zu bilden.

2. Bremsscheibe nach Anspruch 1, **dadurch gekennzeichnet, dass** das Schweißmaterial, das für das Hartlöten verwendet wird, eine Schmelztemperatur von zumindest 950°C, bevorzugt 1050°C und bevorzugter 1100°C besitzt.

3. Bremsscheibe nach Anspruch 2, **dadurch gekennzeichnet, dass** das Schweißmaterial aus einem Ni-Cu-basierten Verbundstoff oder einem Fe-Ni-basierten Verbundstoff besteht.

4. Bremsscheibe nach einem der vorhergehenden Ansprüche, **dadurch gekennzeichnet, dass** sie aus Stahl, bevorzugt rostfreiem Stahl besteht.

5. Bremsscheibe nach einem der vorhergehenden Ansprüche, **dadurch gekennzeichnet, dass** die beiden Halbscheiben durch mehrere Abschnitte geformt sind, die im Wesentlichen einem kreisförmigen Sektor entsprechen, wobei die Abschnitte der Halbscheibe im Vergleich zu denen der anderen Halbscheibe versetzt sind, so dass nach dem Hartlöten ein Abschnitt einer Halbscheibe zumindest zwei Abschnitte der anderen Halbscheibe zusammen hält.

6. Bremsscheibe nach Anspruch 5, wobei drei Abschnitte pro Halbscheibe vorgesehen sind.

7. Verfahren zur Herstellung von Bremsscheiben nach einem der Ansprüche 1-6, umfassend das Erhalten von zwei Halbscheiben, das Legen von Schweißmaterial für ein Hartlöten bei einer Temperatur von zumindest 1000°C, bevorzugt zumindest 1050°C, bevorzugter zumindest 1100°C, das relative Positionieren der Halbscheiben an einer Seite von zumindest einer der Halbscheiben, das Erhitzen bei einer Temperatur, die zum Hartlöten geeignet ist.

8. Verfahren nach Anspruch 7, wobei jede Halbscheibe durch Zusammenbauen mehrerer Abschnitte, die einem Abschnitt einer kreisförmigen Krone entsprechen, erhalten wird.

9. Verfahren nach einem der Ansprüche 7 oder 8, wobei das Schweißmaterial auf Ni-Cu oder Fe-Ni basiert.

10. Verfahren nach einem der Ansprüche 7 - 9, wobei das Schweißmaterial ein Verbundstoff ist und das Legen mittels eines Siebdruckprozesses stattfindet.

## Revendications

1. Disque de frein comprenant deux demi-disques (1, 2) ayant chacun une surface de friction capable d'interagir avec une plaquette de frein et reliée directement l'une à l'autre par brasage sur une face opposée à ladite surface de friction, **caractérisé en ce que** les deux dits demi-disques ont des trous (8, 9) et/ou des évidements dans le profilé d'arête (3, 4, 5, 6) qui sont décalés par rapport à ceux de l'autre demi-disque dans le but de former avec l'autre demi-disque des cavités fermées ou semi-fermées dans le disque de frein sur les surfaces de disque exposées aux plaquettes de frein, lesdits trous et/ou lesdites arêtes d'un demi-disque chevauchant en partie les trous et/ou les arêtes de l'autre demi-disque dans le but de former des trous débouchants (10) dans le disque.

2. Disque de frein selon la revendication 1, **caractérisé en ce que** le matériau de soudage utilisé pour le brasage présente une température de fusion d'au moins 950 °C, de préférence de 1 050 °C et de manière préférée entre toutes de 1 100 °C.

3. Disque de frein selon la revendication 2, **caractérisé en ce que** le matériau de soudage est fabriqué en un alliage à base de Ni-Cu ou un alliage à base de Fe-Ni.

4. Disque de frein selon l'une quelconque des revendications précédentes, **caractérisé en ce qu'**il est en acier, de préférence en acier inoxydable.

5. Disque de frein selon l'une quelconque des revendications précédentes, **caractérisé en ce que** les deux demi-disques sont formés par plusieurs parties correspondant sensiblement à un secteur circulaire, les parties du demi-disque étant décalées par rapport à celles de l'autre demi-disque de sorte qu'après le brasage, une partie de demi-disque maintienne ensemble au moins deux parties de l'autre demi-disque.

6. Disque de frein selon la revendication 5, dans lequel lesdites parties sont trois par demi-disque.

7. Procédé de production de disques de frein selon l'une quelconque des revendications 1 à 6, comprenant l'obtention de deux demi-disques, la pose de matériau de soudage pour un brasage à une température d'au moins 1 000 °C, de préférence d'au moins 1 050 °C, de manière préférée entre toutes d'au moins 1 100 °C, le positionnement relatif des demi-disques sur une face d'au moins l'un des demi-disques, le chauffage à une température adaptée au brasage.

8. Procédé selon la revendication 7, dans lequel chaque demi-disque est obtenu par assemblage de plusieurs parties correspondant à une partie de couronne circulaire.

9. Procédé selon la revendication 7 ou 8, dans lequel le matériau de soudage est à base de Ni-Cu ou Fe-Ni.

10. Procédé selon l'une quelconque des revendications 7 à 9, dans lequel le matériau de soudage est un alliage et la pose se produit à l'aide d'un processus de peinture sur écran.
